# EUROPÄISCHE PATENTANMELDUNG

(11) **EP 0 543 031 A1**
(43) Veröffentlichungstag der Anmeldung: **26.05.1993**
(21) Anmeldenummer: 91119441.3
(22) Anmeldetag: 14.11.1991
(51) Int. Cl.: H02K 53/00

(54) **Permanentmagnetmotoren**

(71) Anmelder: Kratochvil, Georg (Jiri), CH-8005 Zürich (CH)
(72) Erfinder: Kratochvil, Georg (Jiri), CH-8005 Zürich (CH)

(57) **Zusammenfassung**

Der Motor, aus Stator und Rotor bestehend, beinhaltet ein oder mehrere Permanentmagnetsysteme, dessen Gestaltung von Fall zu Fall verschieden sein kann.

Beim einhalten des Bauanweisung, wo das richtige Verhältnis zwischen der Form, Stärke, Länge, Anzahl, Polarität und der Anordnung der Magnete eine absolute Rolle spielt, kommt als Resultierende eine Drehbewegung herfor.

Die kann dann beliebig eingesetzt werden.

## Beschreibung

Die Erfindung betrifft ein Gerät, mit dessen Hilfe wird die Kraft der Permanentmagnete, in eine Drehbewegung umgewandelt.

Zu diesem Gerät sind keine Paralellen bekannt. Durch seinen ähnlichen Prinzip, kann er bestenfalls mit dem Drehstromgenerator, oder mit dem Drehstrommotor verglichen werden.

Permanentmagneten dienen dem Motor als Energiequelle, die er in der Form von mechanischer Energie wiedergibt. Sie kann entweder Arbeit verrichten, oder in elektrischen Strom umgewandelt werden.

Unter Betriebsbedingungen schwächen sich die Magneten mit der Zeit ab und müssen dann wieder aufbereitet werden.

Die Lösung des Problems beruht auf der Summeteilung der, dem Drehrichtung entgegenwirkenden Kräfte, nachfolgend Bremskräfte genannt, in einzelne, unter Beibehaltung der Summe der Drehbewegungerzeugender Kräfte, nachfolgend genannt Drehkräfte. Die erfinderische Lösung ist die Verwendung von ungleicher Anzahl der Statormagnete, gegenüber denen, des Rotors, (+oder-1 wobei sich die letzteren an den anderen vorbeidrehen und unter gleichzeitiger Berücksichtigung einer notwendiger Rellation zwischen der Anzahl und der Länge der C-Magnete.* (Siehe S. 9) Im übrigen basiert das Prinzip auf der Tatsache, das sich die gleichpoligen Magnetenden abstossen und die ungleichpoligen anziehen.

Die folgende Beschreibung bezieht sich auf die nicht im Masstab gezeichneter Skizze.

Der Motor besteht aus zwei unterschiedlichen Magnettypen. Sie sind entweder verbogen und ringformig, oder gerade und sternformig angeordnet. Die einen bilden der Stator, die anderen der Rotor aus. Beide sind mit dem Statorgehäuse, bzw. mit der Rotorwelle fest verbunden. Der Rotor ist gegenüber dem Stator drehbar gelagert und axial verschiebbar. was dem Ein- und Ausschalltung des Motors dient, wenn keine andere Konstruktion den Vorzug erhält.

In dem ganzen System herscht Symetrie. Die Magneten sind je nach Typ gleich lang.

Die neun ringformig angeordneten Magneten, wegen seiner Krüm* mung nachfolgend C-Magneten genannt,* sind hier als Statormagnete zu verstehen. Die acht sternformig angeordneten Magneten, nachfolgend I-Magneten genannt, als Rotor. Die Nordpols der C-Magneten sind hier in den Gegenuhrzeigesinn gerichtet. Die I-Magneten mit dem Nordpol nach aussen. Diese Anordnung verursacht, das die Drehbewegung im Uhrzeigesinn erfolgt. Durch die Umpolung der I-Magnete, kann die Drehrichtung geändert werden.

Wie die Skizze zeigt, sind sieben der acht I-Magneten auf seinem Weg entlang der C-Magnete, gleichzeitig von dessen gleichpoligen Enden abgestossen und von den ungleichpoligen angezogen. Damit stehen sie als Summe der einzelnwirkender Bremskraft gegenüber und überwinden sie. Eine solche Überwindung stellt ein Schritt dar. Er wiederholt sich 72 x pro Rotorumdrehung. Kommt keine Überwindung zur Stande, muss der Zahl der Magnete erhöht und die Länge der C-Magnete vergrössert werden. Die Länge versteht sich nicht geradelinig, sondern als Teil eines Kreises, gemessen an dem innerem Radius des Magnetes.

Beim Anwendung von acht I-Magneten, wirken die Bremskräfte schrittweise um 40° in dem Gegenuhrzeigesinn. Bei zehn I-Magneten um 4o° im Uhrzeigesinn. Beim letzteren, erhöht sich gleichzeitig der Schrittzahl pro Rotorumdrehung von 72 auf 90.

Der I-Magnet braucht zur Überwindung einer Bremskraft, die immer aus einer Anzieh- und einer Abstosskraft besteht, eine gewisse Strecke. Diese Streckenlänge ist ein wichtige Kriterium für die Auslegung eines Motors. Multipliziert mann sie mit der Anzahl der I-Magnete, bekommt mann die Mindestlänge der C-Magnete. Sie wird nach Bedarf noch vergrössert.

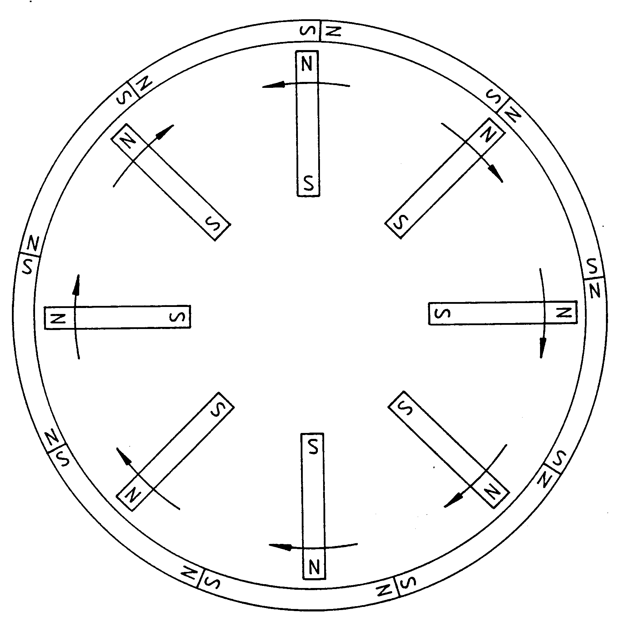

## Patentansprüche

1. Ein Motor, aus einem oder mehreren, Rotor und Stator bildenden Permanentmagnetsystemen, dadurch gekennzeichnet, das die Drehbewegung zur Stande kommt durch eine vorherfestgelegte, sich vorbeidrehende Anzahl gleichpolarierter, sternformig angeordneter Permanentmagneten, an einem immer um einen Stück grösseren oder kleineren Anzahl anderen, entsprechend verbogenen Permanentmagneten, von gleichpoligen Magnetenden zum ungleichpoligen, die ringformig angeordnet sind und dessen gleichnamigen Pole alle in eine der beiden möglichen Richtungen zeigen. Er ist weiter dadurch gekennzeichnet, das die ringformig angeordneten Magneten von genügender Länge sein müssen und die Summe der Drehkräfte immer grösser ist, als diejenige der grössten, einzelnen Bremskraft, was alles zur dessen Verwendung als Antrieb führt. Die beiden Magnettypen können dabei aufeinanderwirken aus beliebigen Richtungen, und untereinander die Rollen tauschen.

2. Ein Motor nach Anspruch 1, wo die Magneten, bzw. ein oder mehrere Magnetsysteme verschiedene Formen annehmen und wo die Magnetkräfte aus mehreren, gleichpolig zusammengefügten Magneten gebildet sind.

3. Ein Motor nach Anspruch 1 und 2, wo anstatt der C-Magneten, zur I-Magneten schrägstehenden und in Richtung I-Magneten die Masseabnehmenden, C-formigen Eisenkeile angebracht sind und die Eisenkeile wieder um einen Stück im Über- oder im Minderzahl sind. Die Eisenkeile können auch durch andere wirksamen Gebilden ersetzt werden, wie z.B. sternformige, voneinander isolierten Transformatorblechringen.

4. Ein Motor nach Anspruch 1 bis 3, der nach Anbringung eines entsprechenden elektrischen Windungssystems als Mehrphasengenerator oder auch als Mehrphasenmotor verwendet wird.

5. Ein Motor nach Anspruch 1 bis 4, wo die beschriebenen Systeme in-, auf- oder nebeneinander angebracht oder auch gegeneinander verschoben sind und seine Verwendung.

6. Ein Verfahren zur Erzeugung eines speziellen mehrphasigen elektrischen Stromes, dadurch gekennzeichnet, das er mittels eines, für diesen Zweck extra angefertioten Gerätes, nach Anspruch 1 bis 5 erzeugt wird.

7. Ein spezieller mehrphasiger elektrischer Strom, erzeugt nach Anspruch 4, und als resultierender Produkt des Verfahrens, nach Anspruch 6 und seine Verwendung.

8. Permanentmagneten, wie im Anspruch 2, aus zwei oder mehreren Permanentmagneten bestehend, sich gegenseitig abstossend, zusammengefügt sind und dessen Verwendung.

9. Magnetische oder Elektromannetische Felder, bzw. Kräfte, nach Anspruch 2 und 8, sich gegenseitig aus seinen natürlichen Positionen herausstössend und dessen Verwendung.
